(19) Europäisches Patentamt

European Patent Office

Office européen des brevets

(11) **EP 0 687 648 B1**

(12) **EUROPÄISCHE PATENTSCHRIFT**

(45) Veröffentlichungstag und Bekanntmachung des Hinweises auf die Patenterteilung:
**16.09.1998 Patentblatt 1998/38**

(51) Int. Cl.$^6$: **C01B 3/32**

(21) Anmeldenummer: **95107821.1**

(22) Anmeldetag: **23.05.1995**

(54) **Zweistufige Methanol-Reformierung**

Two stages methanol reforming

Réformage de méthanol en deux étapes

(84) Benannte Vertragsstaaten:
**DE FR GB IT**

(30) Priorität: **15.06.1994 DE 4420752**
**15.06.1994 DE 4420753**

(43) Veröffentlichungstag der Anmeldung:
**20.12.1995 Patentblatt 1995/51**

(73) Patentinhaber:
**DBB Fuel Cell Engines Gesellschaft mit beschränkter Haftung**
**73230 Kirchheim/Teck-Nabern (DE)**

(72) Erfinder:
• **Heil, Dietmar, Dipl.-Ing.**
**D-88477 Hörenhausen (DE)**
• **Benz, Uwe, Dipl.-Ing.**
**D-88690 Uhldingen (DE)**

(74) Vertreter: **Kocher, Klaus-Peter**
**Daimler-Benz Aktiengesellschaft,**
**FTP/S - C106**
**70546 Stuttgart (DE)**

(56) Entgegenhaltungen:
**WO-A-88/01983**          **US-A- 4 865 624**

**Beschreibung**

Die Erfindung betrifft ein Verfahren und eine Vorrichtung zur katalytischen Wasserdampfreformierung von Kohlenwasserstoffen, insbesondere Methanol, gemäß dem Oberbegriff des Patentanspruchs 1 beziehungsweise 6.

Aus der US-PS 48 65 624 ist ein zweistufiges Verfahren und eine Vorrichtung zur katalytischen Wasserdampfreformierung von Methanol bekannt, bei dem die beiden Stufen mit Hilfe eines Wärmeträgeröls unabhängig voneinander auf vorgegebenen Temperaturniveaus gehalten werden. Aus der DE 36 31 366 A1 ist außerdem eine als Rohrbündelreaktor ausgebildete, zweistufige Vorrichtung zur katalytischen Spaltung gasförmiger Kohlenwasserstoffe mit Wasserdampf bekannt, bei der die Reaktionsrohre als erste Stufe ausgebildet sind und bei der der Zwischenraum zwischen den Reaktionsrohren zur Ausbildung einer zweiten Stufe ebenfalls mit Katalysator befüllt ist. Hier wird dem Reaktionsgas nach Durchströmen der ersten Stufe außerhalb des eigentlichen Reaktionsraumes nochmals Energie zugeführt (das Reaktionsgas wird überhitzt) um das Fortschreiten der Reaktion zu ermöglichen.

Die erste Anordnung gemäß US-PS 48 65 624 weist den Nachteil auf, daß beide Stufen prinzipiell gleich aufgebaut sind. Das heißt, bei beiden Stufen wird der gleiche hohe bauliche Aufwand zur Beheizung beziehungsweise Thermostatisierung des Prozesses betrieben. Für jeden der Reaktoren wird ein hoher Anteil des Bauvolumens vom Wärmeträger eingenommen. Dies führt in der Summe zu großen Werten von Wärmekapazität, Masse und Volumen.

Die zweite Anordnung gemäß DE 36 31 366 A1 weist demgegenüber zwar einen deutlich verringerten Anteil an Raum für den Wärmeträger im Reaktor auf, benötigt jedoch im eigentlichen Reaktor auch noch Raum und baulichen Aufwand zur Überhitzung der Reaktionsgase. Das resultierende Verhältnis von Katalysatormasse zu Reaktorgesamtvolumen und von Katalysatormasse zu Gesamtmasse wird daher ungünstig.

Die Aufgabe der Erfindung besteht darin, ein Verfahren und eine Vorrichtung zur effizienten Wasserdampf-Reformierung von Kohlenwasserstoffen zu schaffen, das die besonderen Anforderungen im mobilen Einsatz hinsichtlich Gewicht, Volumen, Dynamik und baulichem Aufwand erfüllt.

Die Aufgabe wird erfindungsgemäß durch die kennzeichnenden Merkmale des Patentanspruchs 1 beziehungsweise 6 gelöst.

Die Anpassung des Reformierungs-Verfahrens an die oben genannten speziellen Anforderungen für die mobile Anwendung durch eine zweistufige Prozeßführung ist folgendermaßen gelöst:

- Auslegung und Betrieb der ersten Stufe als wärmeeintragsoptimierte Stufe mit dem Ziel einer lediglich unvollständigen Umsetzung des Kohlenwasserstoffs (Umsetzung zu zirka 60-90% bei Nominallast),
- Auslegung und Betrieb der zweiten Stufe nur schwach beheizt oder unbeheizt in einer restumsatzoptimierten Stufe mit einem möglichst hohem Verhältnis von Katalysatorvolumen zu Reaktorgesamtvolumen.

Als weiteres wesentliches Kriterium bei der vorgeschlagenen Lösung ist die Minimierung des im Reaktor für das Wärmeträgermedium benötigten Raumes zu nennen. Dies ist besonders bei der Verwendung von flüssigen Wärmeträgermedien wichtig zur Verringerung der thermischen Kapazität, welche für die Kaltstarteigenschaften mit entscheidend ist.

Eine Ausweitung des zweistufigen Prinzips auf mehrere Stufen beim Übergang von einem wärmeeintragsoptimierten Design auf ein restumsatzoptimiertes Design der einzelnen Reaktorstufen ist im Rahmen dieser Erfindung enthalten.

Der wesentliche Vorteil der zwei- oder mehrstufigen Reaktionsführung liegt also darin, daß für jede Stufe reaktorbauartspezifisch und reaktionsspezifisch die wesentlichen Parameter, wie zum Beispiel:

- Reaktorgeometrie (Lauflänge, Rohrdurchmesser, Plattenabstände, spezifische Wärmeaustauschoberfläche)
- Katalysatorart, -korngröße und -menge
- Betriebstemperatur und Temperaturgradienten
- Strömungsgeschwindigkeit, Verweilzeit, Druckverlust optimiert werden könne.

Die Anordnung gemäß Anspruch 9 weist den Vorteil auf, daß für das Wärmeträgermedium im Vergleich zu herkömmlichen Rohrbündelreaktoren nur wenig Raum benötigt wird. Während bei herkömmlichen Rohrbündelreaktoren der Wärmeträger den gesamten Raum zwischen den Rohren und dem gemeinsamen Gehäuse ausfüllt, wird in der vorgeschlagenen Anordnung dieser Raum ebenfalls für den Katalysator und die Reaktion verwendet. Das Wärmeträgermedium wird hier im Ringspalt der konzentrischen Rohre geführt. Hierdurch wird ein guter Wärmeübergang an Innen- und Außenrohr erreicht, welcher durch Leitstrukturen oder Einbringung von Nuten, wie bei Sicherheits-Doppelrohren üblich, weiter verbessert werden kann. Durch die Anordnung von Leitstrukturen in den Reaktionsrohren kann ebenfalls ein guter Wärmeübertrag von der Rohrwand auf das Reformgas gewährleistet beziehungsweise die effektive Wärmeaustauschfläche vergrößert werden. Gleichzeitig ist der Anteil des Katalysatorvolumens am Gesamtvolumen sehr groß. Insgesamt kann somit eine extrem kompakte Vorrichtung für die Reformierung bereitgestellt werden.

Weitere Vorteile und Ausgestaltungen gehen aus den Unteransprüchen und der Beschreibung hervor und werden nachfolgend am Beispiel der Methanol-Reformierung dargestellt. Die Erfindung ist nachstehend anhand einer Zeichnung näher beschrieben, wobei

Fig. 1    den prinzipiellen Aufbau einer erfindungsgemäßen Vorrichtung,

Fig. 2    ein Ausführungsbeispiel eines plattenförmigen Reaktors,

Fig. 3    ein weiteres Ausführungsbeispiel eines plattenförmigen Reaktors,

Fig. 4    ein Ausführungsbeispiel für einen rohr- oder kastenförmigen Reaktor,

Fig. 5    eine Prinzipdarstellung eines zweistufigen Rohrbündelreformers,

Fig. 6    einen Schnitt senkrecht zu den Reaktionsrohren durch die Vorrichtung aus Fig. 5,

Fig. 7    ein weiteres Ausführungsbeispiel eines zweistufigen Rohrbündelreaktors und

Fig. 8    ein Schaubild für den Methanolumsatz und den Wärmebedarf bei der Wasserdampfreformierung von Methanol als Funktion der Lauflänge in einem isothermen Reaktor zeigt.

Die Erzeugung von Wasserstoff aus Kohlenwasserstoffen ist in der chemischen Industrie üblich. Auch für die Anwendung in mobilen Systemen wird die Onboard-Erzeugung von Wasserstoff aus Kohlenwasserstoffen aufgrund der sehr hohen Speicherdichte des Wasserstoffs in der chemisch gebunden Form zunehmend interessant. Dies gilt vor allem bei der Speicherung in Form flüssiger Kohlenwasserstoffe, wie zum Beispiel Methanol. Bei der Wasserdampfreformierung von Kohlenwasserstoffen wird ein Gemisch aus dem Kohlenwasserstoff und Wasser in dampfförmigen Zustand unter Zufuhr von Wärme an einem geeigneten Katalysator umgesetzt. Für Methanol sind folgende Gleichungen relevant:

Pyrolyse:

$$CH_3OH \rightarrow 2\ H_2 + CO \qquad (1)$$

Wasserdampf-Shift-Reaktion:

$$CO + H_2O \rightarrow CO_2 + H_2 \qquad (2)$$

Wasserdampf-Reformierung:

$$CH_3OH + H_2O \rightarrow 3\ H_2 + CO_2 \qquad (3)$$

Die Reaktion nach Gleichung (1) ist stark endotherm, Reaktion (2) schwach exotherm und die Summenreaktion (3) stark endotherm.

Bei mobilen Anwendungen, beispielsweise bei der Wasserdampfreformierung für Brennstoffzellen in Kraftfahrzeugen, sind im Gegensatz zur Anwendung in der chemischen Industrie neben der Forderung nach einer hohen Ausbeute an Wasserstoff, beziehungsweise einem entsprechend hohen Kohlenwasserstoffumsatz, auch noch die Anforderungen:

- geringe Reaktormasse,
- geringes Reaktorvolumen,
- geringer baulicher Aufwand und damit geringe Kosten,
- gute dynamische Eigenschaften, das heißt auch geringe thermische Masse beziehungsweise Wärmekapazität für schnellen Kaltstart essentiell.

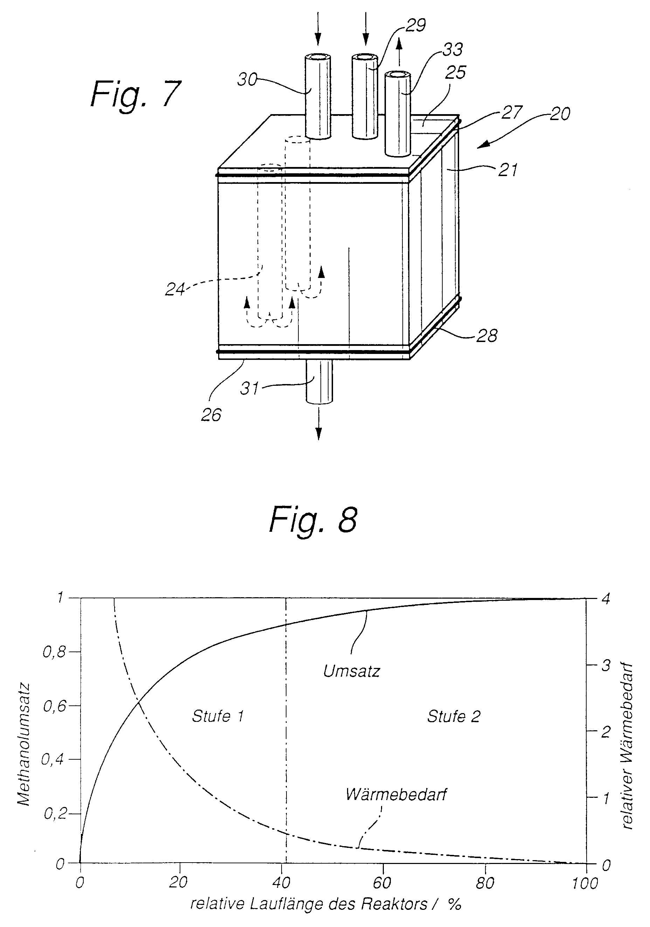

Das Schaubild gemäß Fig. 8 zeigt den Wärmebedarf und den Methanolumsatz bei der Wasserdampfreformierung von Methanol als Funktion der relativen Lauflänge in einem isothermen Reaktor. Eine Analyse dieses Prozesses zeigt, daß im Idealfall, das heißt bei sehr gutem Wärmeeintrag beziehungsweise isothermer Reaktionsführung, im Anfangsbereich des Reaktors die Reaktion unter sehr starkem Energiebedarf sehr stark fortschreitet. Im gezeigten Beispiel ist nach zirka 40% der Lauflänge, das heißt auch nach Durchströmen von 40% der Katalysatormenge bereits ein Umsatz von 90% erreicht und auch 90% der Energie sind verbraucht. Für den Restumsatz von 90% auf 99% wird nur noch ungefähr 9% der thermischen Energie, aber 60% der Katalysatormenge benötigt.

Auch das Experiment ergibt, daß die Wasserdampfreformierung nach Reaktion (3) zunächst wärmeeintragslimitiert ist. Das heißt im Reaktor muß im Eingangsbereich effektiv die Wärmeenergie zur Verfügung gestellt beziehungsweise an den Reaktionsort am Katalysator gebracht werden. Gelingt dies, so kann pro Katalysatormasse ein sehr hoher Mengenstrom an Wasserstoff erzeugt werden. Ein kompakter Reaktor muß daher mit einer hohen spezifischen Wärmeaustauschoberfläche ausgestattet und möglichst effektiv beheizt werden. Hierzu ist ein hoher baulicher Aufwand erforderlich.

Sobald der größte Teil des Kohlenwasserstoffs umgesetzt und damit der größte Teil des Wärmebedarfs zugeführt ist, zeigt sich die Reaktion im Experiment als stoffübergangslimitiert. Das heißt, für einen vollständigen Umsatz wird eine hinreichende Menge an Katalysator (aktive Oberfläche und Verweilzeit im Reaktionsraum) benötigt.

Generelles Ziel der Erfindung ist es, mit diesem zweistufigen Prinzip letztendlich kompakter und kostengünstiger zu bauen als dies mit einstufigen Reaktoren möglich ist, die hinsichtlich der oben genannten Limitierungen im Prozeß als Kompromiß ausgeführt sind.

Um die erste Stufe hinsichtlich des Wärmeeintrags zu optimieren wird diese mit einer hohen spezifischen Wärmeaustauschfläche, vorzugsweise größer 250 $m^2/m^3$, versehen. Dabei kann durch geeignete Maßnahmen, wie zum Beispiel durch Berippung der Oberflächen oder durch gut wärmeleitende Einsätze die Wärmeaustauschoberfläche im Bereich des Wärmeträgers und insbesondere im Reaktionsbereich erhöht werden. Gleichzeitig werden die Wärmetransportwege im Katalysator minimiert, indem die Spaltweiten, vorzugsweise auf Werte kleiner 15 mm, beziehungsweise die Rohrdurchmesser, vorzugsweise auf Werte kleiner 20 mm, verringert werden. Hierdurch entsteht allerdings ein erhöhter baulicher Aufwand für diese Stufe und damit ein relativ ungünstiges Verhältnis von Katalysatormasse zu Gesamtmasse der ersten Stufe. Hieraus ergibt sich die Notwendigkeit, den Katalysator möglichst hoch zu belasten. Vorzugsweise mit Belastungen größer 10 $Nm^3/h$ $H_2$ pro Kilogramm Katalysator, um die Absolutmenge des Katalysators und damit das Gewicht und das Volumen der ersten Stufe gering zu halten. Um bei den nun im Vergleich zu sonst üblichen technischen Ausführungen geringeren Spaltweiten Randgängigkeitseffekte zu verringern, sowie um den wärmetechnisch nun deutlich verbesserten Katalysator bei den sehr hohen Belastungen effektiv auszunutzen ist es notwendig, die Korngröße des Katalysators durch geeignete Maßnahmen zu vermindern, vorzugsweise auf Abmessungen kleiner 2 mm.

Eine weitere Möglichkeit, die Katalysatorausnutzung in der ersten Stufe zu erhöhen, liegt in der Anhebung der Reaktortemperatur beziehungsweise der Temperatur des Wärmeträgermediums. Dadurch wird trotz der Temperaturabsenkung im Katalysator durch den hohen spezifischen Wärmeverbrauch, das heißt trotz eines hohen Temperaturgradienten zwischen Wärmeträger und Katalysator, der Katalysator selbst auf einer hohen Temperatur und damit hoher Aktivität gehalten.

In der ersten Stufe wird der Kohlenwasserstoff nur teilweise umgesetzt, vorzugsweise zu 60-90% bei Nominallast. Da bei der hohen spezifischen Katalysatorbelastung bei gleichzeitig gewünschtem hohen reaktionsseitigen Wärme- und Stoffübergang hohe Strömungsgeschwindigkeiten anzustreben sind und da die Katalysatorkorngröße kleiner ist als allgemein üblich, ist die Lauflänge in der ersten Stufe gering zu halten, vorzugsweise kleiner 50 cm, um den Druckverlauf auf der Reaktionsseite zu vermindern.

Die zweite Stufe benötigt für die Restumsetzung nur noch ungefähr 10-40% der Reaktionswärme allerdings bei vorzugsweise mehr als 50% der gesamten Katalysatormenge. Hierdurch kann der bauliche Aufwand für die Wärmeeinbringung deutlich verringert werden. Vorzugsweise kann die spezifische Wärmeaustauschfläche auf kleiner 100 $m^2/m^3$ reduziert werden beziehungsweise kann der Wärmeeintrag verstärkt durch Rippen realisiert werden. Je nach Abstimmung der ersten und zweiten Stufe wird nur eine schwache Beheizung notwendig. Insbesondere kann hier auch eine sehr kompakt bauende elektrische Beheizung eingesetzt werden, die in der ersten Stufe aus Wirkungsgradgründen nicht einsetzbar ist. Die Reaktion kann jedoch auch adiabat ohne Wärmezufuhr geführt werden. Ein Teil der Reaktionsenergie kann auch in Form von latenter Wärme im Reaktionsgas selbst genutzt werden, insbesondere wenn die zweite Stufe bei niedrigerem Temperaturnievau betrieben wird. Ein niedrigeres Temerpaturniveau in der zweiten Stufe verschiebt darüber hinaus das Reaktionsgleichgewicht zugunsten eines niedrigeren CO-Gehaltes im Produktgas, Dies ist vor allem für die weitere Gasreinigung in einem System zur Stromerzeugung mit Hilfe von PEM-Brennstoffzellen vorteilhaft.

Durch den einfacheren Aufbau der zweiten Stufe kann das Verhältnis von Reaktionsmasse zu Katalysatormasse niedrig gehalten werden, vorzugsweise kleiner 2:1. Das Verhältnis Reaktorgesamtvolumen zu Katalysatorvolumen läßt sich auf nahezu 1 reduzieren. Der Gehalt an Wärmeträgerfluid in der zweiten Stufe kann deutlich verringert werden oder es kann sogar ganz auf ein Wärmeträgerfluid verzichtet werden. Auch in der zweiten Stufe ist es vorteilhaft, die Katalysatorkorngröße auf kleiner 2 mm zu reduzieren, um die Stoffaustauschvorgänge zu verbessern. Im Vergleich zur ersten Stufe sind bei Rohr- beziehungsweise Plattenreaktoren die Rohrdurchmesser beziehungsweise Plattenabstände deutlich größer.

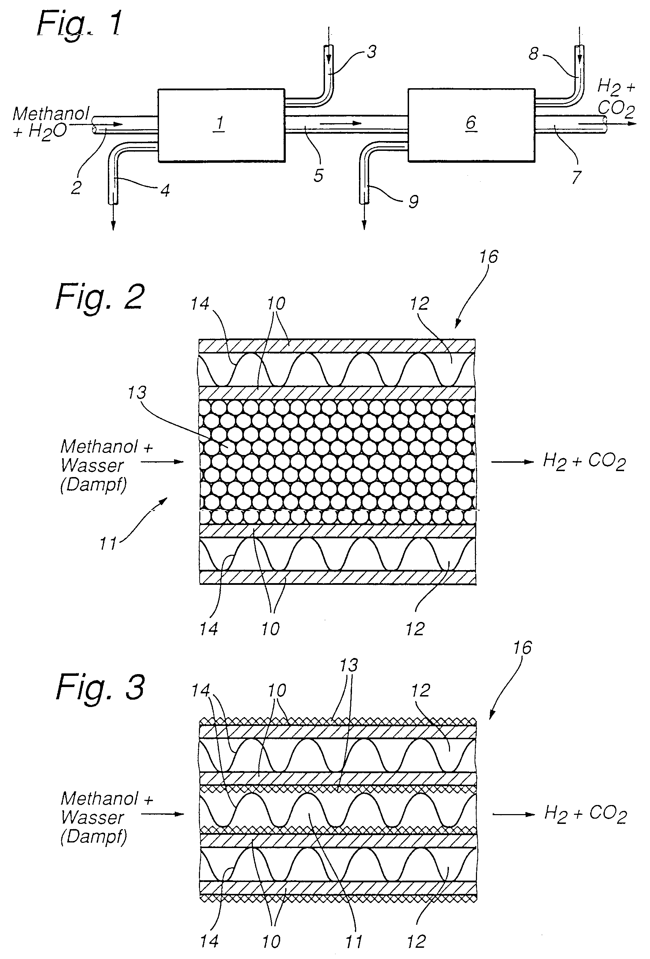

Fig. 1 zeigt eine zweistufige Vorrichtung zur Reformierung von Methanol, bestehend aus einem ersten Reaktor 1 und einem zweiten Reaktor 6. Dem ersten Reaktor 1 wird über eine Zuleitung 2 das Methanol/Wasserdampfgemisch zugeführt. Über eine erste Heizleitung 3 wird dem Reaktor 1 außerdem ein Wärmeträgermedium zugeführt und nach dem Durchströmen des Reaktors 1 über eine erste Abströmleitung 4 wieder abgeführt. Im ersten Reaktor 1 wird hierbei nur ein Teilumsatz des Methanols angestrebt, typischerweise ungefähr 60-90% bezogen auf Maximallast. Nach dem Durchströmen des Reaktors 1 wird das Gasgemisch, welches also noch nennenswerte Anteile nicht umgesetzter Edukte enthält, über eine Verbindungsleitung 5 zu einem zweiten Reaktor 6 weitergeleitet. Das bei der Reformierung entstandene Produktgas, vornehmlich ein Gemisch aus Wasserstoff und Kohlendioxid, wird anschließend über eine Auslaßleitung 7 abgeleitet. Der zweite Reaktor 6 ist restumsatzoptimiert aufgebaut, das heißt, er enthält größere Mengen an Katalysatormaterial, welches bei geringerem Wärmeeintrag niedriger belastet ist. Dem zweiten Reaktor 6 kann über eine zweite Heizleitung 8 ebenfalls ein Wärmeträgermedium zugeführt werden, welches anschließend über eine zweite Abströmleitung 9 wieder abgeführt wird. Prinzipiell können hierbei sowohl flüssige als auch gasförmige Wärmeträgermedien eingesetzt werden. Insbesondere die zweite Reaktionsstufe 6 kann wegen des geringen Heizleistungsbedarfs auch elektrisch beheizt werden. Dadurch kann der für den Wärmeeintrag notwendige Anteil an aktiver Masse verringert werden. Der genaue Aufbau der beiden Reaktoren 1, 6 wird weiter unten anhand der Figuren 2 bis 7 näher beschrieben.

Mit Hilfe der oben beschriebenen Anordnung wird die Reformierung des Methanol/Wasserdampfgemisches in einem zweistufigen Prozeß durchgeführt. Die erste Stufe, die im ersten Reaktor 1 abläuft und eine hohe spezifische Wärmeaustauschoberfläche aufweist, ist hinsichtlich der Wärmeeinkopplung vom dem Wärmeträgermedium zum Katalysatormaterial beziehungsweise dem zu reformierenden Gas optimiert. Hierbei wird die Umsetzung des Methanols bei einer Temperatur von 250°-400° Celsius und gegebenenfalls bei hohem Temperaturgradienten vom Wärmeträger zum Katalysator durchgeführt, wobei der Umsetzungsgrad in dieser ersten Stufe vorzugsweise 60 - 90% bezogen auf Maximallast beträgt.

In der zweiten Stufe wird anschließend der Umsatz von Methanol vervollständigt. Hierzu sollte diese zweite Stufe 6 ein günstiges Verhältnis von Reaktormasse zu Katalysatormasse aufweisen. Außerdem kann die zweite Stufe 6 zur Verringerung des CO-Gehalts bei niedrigeren Temperaturen und nur schwach beheizt oder adiabat betrieben werden. Für die zweite Stufe 6 wird ebenfalls ein Katalysator verwendet, wobei in den beiden Stufen 1, 6 unterschiedliche, für den jeweiligen Prozeß optimierte Katalysatoren Verwendung finden können. Es ist auch möglich, beide Stufe in einer gemeinsamen Anordnung zu integrieren, wodurch externe Verbindungsleitungen eingespart und dadurch die Kompaktheit deutlich gesteigert werden kann. Die gesamte Reaktion wird unter Druck, vorzugsweise 1-20 bar, betrieben.

Für die Kombination der beiden Stufen 1, 6 gibt es drei Möglichkeiten, wobei prinzipiell die erste Stufe 1 bezüglich des Wärmeeintrags und die zweite Stufe 6 bezüglich des Umsatzes optimiert ist. Die erste Möglichkeit besteht darin, in beiden Stufen 1, 6 die Wasserdampfreformierung bei 250°-350° C durchzuführen. Weiterhin kann die zweite Stufe 6 auch bei niedrigeren Temperaturen, vorzugsweise 150°-250° C, betrieben werden, wobei hierbei die CO-Shift-Reaktion bevorzugt abläuft. Bei der dritten Möglichkeit wird in der ersten Stufe 1 ausschließlich die Pyrolyse bei 250°-350° C durchgeführt, wobei hierbei in der zweiten Stufe 6 wiederum die CO-Shift-Reaktion bei 150°-250° C bevorzugt durchgeführt wird.

In der Technik sind Rohrbündelreaktoren üblich, in der die Reaktion einstufig geführt wird. Die konventionellen Reaktoren haben jedoch die prinzipielle Schwierigkeit, daß bei den hier erforderlichen kleinen Rohrdurchmessern und aufgrund der fertigungsbedingt notwendigen minimal möglichen Rohrabständen die Packungsdichte des Bündels beschränkt ist, was zur Folge hat, daß der Anteil des Katalysators am Reaktorgesamtvolumen maximal etwa 50% beträgt. Der größte Anteil des restlichen Volumens wird durch das Wärmeträgermedium ausgefüllt. Hierdurch geht Bauraum verloren und bei flüssigem Wärmeträgermedium steigt die Wärmekapazität des gesamten Reaktors an, das heißt die Aufheizzeit bei Kaltstart verlängert sich.

Außerdem ist bei konventionellen Rohrbündelreaktoren ungeachtet des als Funktion der Lauflänge recht unterschiedlichen Wärmebedarfs im ganzen Reaktionsraum der gleiche Aufwand für die Versorgung der Reaktion mit Wärme getrieben; das heißt, die Wärmeaustauschoberfläche pro Katalysatormenge ist konstant. Dies führt dazu, daß als Kompromiß im allgemeinen der Wärmeeintrag im vorderen Bereich des Reaktors zu schlecht ist, während im hinteren Bereich durch das Überangebot an Wärmeaustauschfläche der Wärmeeintrag besser ist als notwendig. Ein weiteres wichtiges Auslegungskriterium ist der Druckverlust im Reaktionsraum. Da Querschnittsfläche und Katalysatorkorngröße im konventionellen Reaktor konstant sind, muß bei diesen beiden Parametern auch hinsichtlich des Druckverlustes ein Kompromiß eingegangen werden.

Bei Plattenreaktoren kann dagegen einerseits der Anteil des Katalysatorvolumens am Gesamtvolumen angehoben werden, andererseits der vom Wärmeträger eingenommenen Bauraum stark reduziert werden. Ein weiterer Vorteil von Plattenreaktoren gegenüber konventionellen Rohrbündelreaktoren liegt in der modularen Bauweise, das heißt die Leistungsgröße kann durch Hinzufügen oder Wegnehmen einzelner Zelleinheiten bestehend aus je einem Reaktionsraum und einem Raum für den Wärmeträger erhöht oder vermindert werden.

Anhand der Fig. 2 und 3 wird nun der prinzipielle Aufbau eines plattenförmigen Reaktors 16 näher beschrieben, wobei jeweils nur eine Einzelzelle dargestellt ist. Der gesamte Plattenreaktor 16 kann aus einer Vielzahl solcher Einzelzellen aufgebaut werden. Im Ausführungsbeispiel gemäß Fig. 2 besteht der Plattenreaktor 16 aus mehreren Trennplatten 10, durch welche abwechselnd Reaktionskanäle 11 und Heizkanäle 12 ausgebildet werden. Im Reaktionskanal 11, dem über die Zuleitung 2 das Methanol/Wasserdampf-Gemisch zugeführt wird, ist eine Katalysatorschüttung 13 eingebracht. Zwischen den Trennplatten 10, die den Heizkanal 12 bilden, ist außerdem eine Stützbeziehungsweise Strömungsleitstruktur 14 eingebracht. Die Heizkanäle 12 werden über die Heizleitung 3, 8 mit dem Wärmeträgermedium versorgt. Der Wärmeaustausch kann hierbei sowohl auf der wärmeabgebenden als auch auf der wärmeaufnehmenden Seite durch Wärmeleitstrukturen, zum Beispiel durch Rippen, verbessert werden.

Alternativ zur Verwendung eines Wärmeträgermediums mit Reaktorexterner Zuführung der thermischen Energie und darauffolgender Wärmeabgabe im Reaktor kann der Reaktor auch direkt durch katalytische Verbrennung eines Brenngases beheizt werden. Auch hierfür eignet sich die Plattenbauart besonders gut. In diesem Fall ist der Heizkanal mit einem geeigneten Oxidationskatalysator beschickt. Im Gegensatz zum konventionellen Rohrbündelreaktor kann hier wegen deutlich geringerem Volumens und der deutlich niedrigeren Spaltweiten im Wärmeträgerraum die exotherme katalytische Verbrennung sicher geführt werden. Durch geeignete Maßnahmen kann die Wärmeproduktion durch die exotherme Reaktion lokal an den Wärmebedarf bei der endothermen Reformierungsreaktion angepaßt werden. Vorteile dieser Anordnung sind der Wegfall eines separaten Wärmeträgerkreislaufes, die mögliche örtliche Anpassung der spezifischen Wärmeleistung und des Temperaturniveaus an den Bedarf der Reformierungsreaktion. Für die zweite Stufe kann wegen des deutlich geringeren Wärmebedarfs gegebenenfalls auf die katalytische Umsetzung verzichtet und die notwendige Energie durch Abkühlung des Abgases der ersten Stufe direkt bereitgestellt werden.

Fig. 3 zeigt ein weiteres Ausführungsbeispiel, wobei gleiche Teile gegenüber Fig. 2 mit gleichen Bezugszeichen gekennzeichnet sind. Im Unterschied zu Fig. 2 wird hierbei keine Katalysatorschüttung 13 verwendet, sondern die den Reaktionskanälen 11 zugewandten Innenseiten der Trennplatten 10 mit einem geeigneten Katalysatormaterial 13 beschichtet. Um die Stabilität der Vorrichtung zu gewährleisten und die Gasströmung zu verteilen ist bei dieser Anordnung auch in den Reaktionskanälen 11 eine Stütz- beziehungsweise Strömungsleitstruktur 14 eingebracht, wobei diese ebenfalls mit Katalysatormaterial 13 beschichtet werden kann. Es ist hierbei auch möglich, die Stütz- beziehungsweise Strömungsleitstruktur 14 für die Heizkanäle 12 und/oder die Reaktionskanäle 11 direkt in die Trennplatten 10 zu integrieren. Anstatt die Trennplatten 10 mit Katalysatormaterial 13 zu beschichteten ist es auch möglich, eine oder mehrere Katalysatormatten 13 zwischen die Trennplatten 10 einzubringen. Die Reaktionskanäle 11 werden dann entweder über separate Stützbeziehungsweise Strömungsleitstrukturen 14 gebildet oder beispielsweise durch Prägen oder Walzen direkt in die Katalysatormatten 13 eingearbeitet.

Werden beide Stufen 1, 6 als plattenförmige Reaktoren ausgebildet, so können diese zur weiteren Reduzierung des Gewichts besonders leicht auch zwischen gemeinsamen Endplatten angeordnet werden.

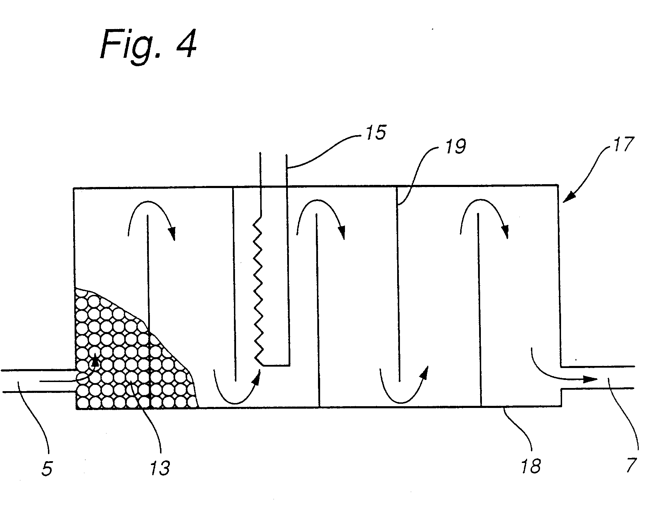

Fig. 4 zeigt einen als zweite Stufe einzusetzenden rohr- oder kastenförmigen Reaktor 17, der als einfacher Schüttreaktor ausgeführt ist. Das Gehäuse 18 des Reaktors 17 ist an den Stirnseiten mit der Verbindungsleitung 5 und der Auslaßleitung 7 verbunden. Innerhalb des Gehäuses 18 sind mehrere parallel verlaufende Umlenkstrukturen 19, die wie bei einem Rohrbündelwärmetauscher jeweils senkrecht zur Gehäuselängsachse angeordnet sind, vorgesehen. Dadurch ergibt sich für das Gasgemisch ein mäanderförmiger Strömungsverlauf. Zur Zufuhr von Wärmeenergie kann zusätzlich eine oder mehrere Heizvorrichtungen 15, die aus einer mit Wärmeträger durchströmten und zur Erhöhung der Wärmeaustauschoberfläche gegebenenfalls berippten Rohrwendel oder einer adäquaten elektrischen Heizung besteht, vorgesehen werden. Dieser Reaktor 17 kann mit einer großen Querschnittsfläche ausgebildet werden, so daß ein günstiges Verhältnis von Reaktormasse zu Katalysatormasse erreicht wird.

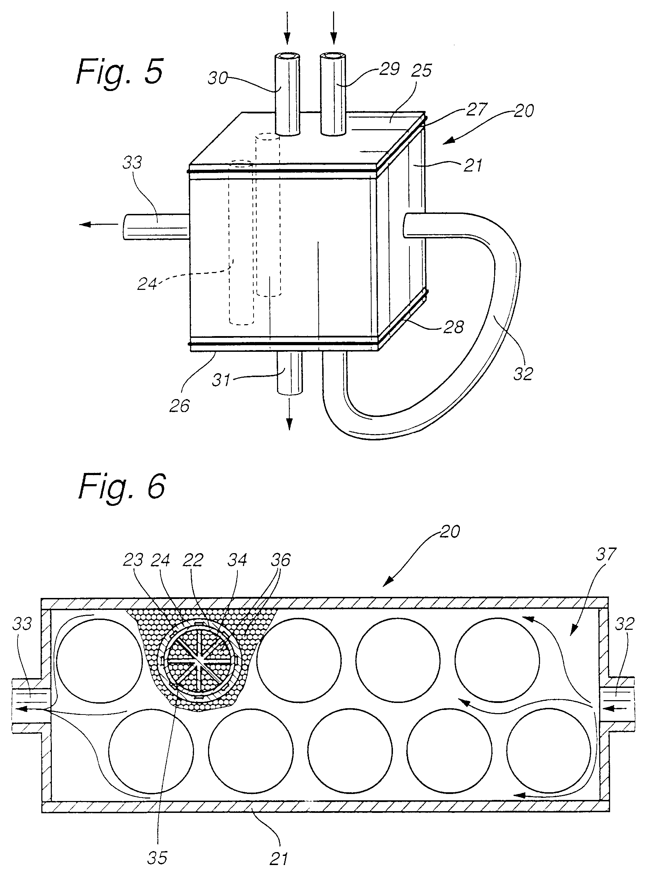

In den Fig. 5 und 6 ist ein insgesamt mit 20 gekennzeichneter Reaktor gezeigt, in dem die zweistufige Reaktionsführung nach dem Anspruch 1 in einem Gehäuse 21 realisiert ist. Es handelt sich hierbei um einen Rohrbündelreaktor mit mehreren parallel angeordneten Doppelrohren. Der Innenraum der inneren Rohre 22 ist mit Katalysator 36 befüllt. Zur Erhöhung der Wärmeaustauschoberfläche ist in jedes der Rohre 22 zusätzlich je ein Einsatz aus gut wärmeleitendem Material, vorzugsweise Kupfer oder Aluminium, mit beispielsweise sternförmigem Querschnitt eingepaßt. Andere Maßnahmen zur Erhöhung der inneren Wärmeaustauschfläche wie zum Beispiel Längs- oder Querrippen sind ebenfalls zweckmäßig. Konzentrisch um die Innenrohre 22 sind Außenrohre 24 angeordnet. Im Raum 23 zwischen den beiden Rohren 22, 24, welcher als Ringspalt oder durch Nuten im Innen- oder Außenrohr 22, 24 ausgebildet ist, wird das Wärmeträgermedium axial oder spiralförmig geleitet. Zur Verbesserung der Strömungs- und Wärmeübergangseigenschaften im Raum 23 können weitere Strukturen oder Einbauten eingebracht werden. Das innerer Rohr 22 bildet somit mit dem Katalysator 36, dem Raum 23 und den Strukturen oder Einbauten zur Erhöhung des Wärmeübergangs die wärmeübergangsoptimierte erste Stufe des Reaktors, in welcher etwa 60-90% des Umsatzes stattfindet. In der ersten Stufe können dadurch, ähnlich wie beim konventionellen Rohrbündelreaktor, maximal etwa 50% des gesamten Reaktorvolumens für den Katalysator 36 zur Verfügung gestellt werden.

Der Gehäuseinnenraum 37 außerhalb der Außenrohre 34 ist ebenfalls mit Katalysator 36 gefüllt und stellt somit die zweite Stufe des Reaktors dar. Die Versorgung der zweiten Stufe mit Prozeßwärme wird hier ebenfalls über den Wärmeträger vom Raum 23 vorgenommen. Das Außenrohr 24 kann zur Erhöhung der Wärmeaustauschfläche eine Außenberippung aufweisen. Generell ist jedoch vorzugsweise zur Verminderung des baulichen Aufwandes die auf die Katalysatormenge bezogene Wärmeaustauschfläche geringer als in der ersten Stufe.

Durch den Abstand der Rohre im Reaktor läßt sich der in der zweiten Stufe für den Katalysator 36 verfügbare Raumanteil leicht von minimal etwa 50% des gesamten Reaktorvolumens bis weit darüber einstellen. In der Summe von erster und zweiter Stufe läßt sich dann ein Volumenanteil des Katalysators 36 am Reaktorgesamtvolumen von über 80% im Vergleich zu maximal 50% beim konventionellen Rohrbündelreaktor erreichen, wodurch der Gesamtreaktor kompakter baut. Gleichzeitig kann das Verhältnis der Katalysatormenge in der ersten Stufe zur Katalysatormenge in der zweiten Stufe zur Optimierung der Stufenabstimmung von zirka 1:1 bis vorzugsweise 1:4 variieren. Im Gegensatz zu den Reaktionsführung gemäß DE 36 31 366 A1 sind hier beide Stufen über den gemeinsamen Wärmeträgerraum 23 beheizt.

Wie der Plattenreaktor eignet sich auch der Doppelrohrreaktor wegen der geringen Spaltweiten im Wärmeträgerkanal besonders gut für die Direktbeheizung durch katalytische Verbrennung im Reaktor. Die beim Plattenreaktor aufgeführten Vorteile und Ausführungen bezüglich der katalytischen Direktbeheizung gelten hier entsprechend.

Das Gehäuse 21 weist einen Gehäusedeckel 25 und einen Gehäuseboden 26 auf, wobei der Gehäusedeckel 25 und der Gehäuseboden 26 über Flanschverbindungen 27, 28 an gegenüberliegenden Enden mit dem Gehäuse 21 verbunden sind. Am Gehäusedeckel 25 ist für das Methanol/Wasserdampfgemisch und für das Wärmeträgermedium jeweils eine Einlaßleitung 29, 30 angeordnet. Die Verteilung des Reformgases und des Wärmeträgermediums auf die einzelnen Reaktionsrohre 22 erfolgt über nicht dargestellte Kanäle im Gehäusedeckel 25. Am Gehäuseboden 26 wird das Wärmeträgermedium und das Reformgas über ebenfalls nicht dargestellte Kanäle gesammelt und aus dem Gehäuse 21 abgeführt. Während das Wärmeträgermedium über eine Auslaßleitung 31 direkt abgeführt wird, wird das Reformgas über eine Rückführleitung 32 erneut dem Rohrreaktor 20 zugeführt. Hierzu mündet die Rückführleitung 32 in eine Seitenwand des Gehäuses 21. Auf der gegenüberliegenden Seitenwand des Gehäuses 21 ist außerdem auch eine Auslaßleitung 33 vorgesehen, über die das Reformgas wieder aus dem Gehäuse 21 abgeführt wird.

Das Schüttgut in den Reaktionsrohren 22 weist vorzugsweise einen Korndurchmesser < 2 mm auf, wobei der Innendurchmesser der Reaktionsrohre 22 selbst vorzugsweise < 30 mm gewählt wird. Im Gehäuseinnenraum 37 kann ein Katalysator 36 mit einer anderen Siebfraktion, beispielsweise mit feinerer Körnung, verwendet werden.

Ein weiterer Vorteil dieser Anordnung ist der gegenüber konventionellen Rohrbündelreaktoren besonders geringe Raum für das Wärmeträgermedium, sowie der hohe Anteil des Katalysatorvolumens am Gesamtvolumen. Dadurch kann ein guter Umsetzungsgrad bei reduziertem Platzbedarf realisiert werden.

Neben der hier gezeigten Ausführungsform mit rechteckigem Gehäuse 2 können auch zylindrische oder andere Gehäuseformen verendet werden. Auch die Anordnung der Reaktionsrohre 22 innerhalb des Gehäuses 21 soll nicht auf die gezeigte Ausführung mit zwei versetzten Reihen beschränkt bleiben, sondern auch andere Anordnungen umfassen. Bei entsprechender Ausführung von Gehäusedeckel und Gehäuseboden kann die Strömungsführung im Reaktor sowie die Zu- und Abführung der Medien anders gestaltet werden. So ist beispielsweise die Zu- und Abfuhr aller Medien über den Gehäusedeckel möglich. Ebenso ist es möglich, reaktorintern den Reaktandenstrom nach dem Durchströmen der Innenrohre umzulenken und dann parallel zu den Rohrachsen im Gegenstrom durch den katalysatorbefüllten Rohraußenraum zurückzuführen. Schließlich können die Reaktionsrohre 22 neben dem gezeigten Kreisquerschnitt auch andere Querschnittsformen aufweisen.

Ein solches Ausführungsbeispiel ist in Fig. 7 gezeigt, wobei gleiche Teile gegenüber den Fig. 5-6 mit gleichen Bezugsziffern gekennzeichnet sind. Im Gegensatz zu dem ersten Ausführungsbeispiel wird das Reaktionsgas nach Durchströmen der ersten Stufe über den Gehäuseboden 2b wieder in den Gehäuseinnenraum 37 zurückgeführt. Auf eine externe Rückführleitung kann dadurch verzichtet werden. Außerdem ist die Auslaßleitung 33 nicht auf einer der Seitenwände des Gehäuses 21 angeordnet, sondern im Gehäusedeckel 25 integriert. Dadurch ergibt sich im Gehäuseinnenraum 37 eine Gasströmung, die im wesentlichen parallel zu den Reaktionsrohren 22, jedoch in entgegengesetzter Richtung verläuft. Die Abfuhr des Wärmeträgermediums kann weiterhin über die Auslaßleitung 31 erfolgen.

**Patentansprüche**

1. Zweistufiges Verfahren zur katalytischen Wasserdampfreformierung von Kohlenwasserstoffen, insbesondere Methanol, unter Zufuhr von Wärmeenergie zum Wasserdampf/Kohlenwasserstoffgemisch,
   **dadurch gekennzeichnet,**
   daß in der ersten Stufe (1) der Kohlenwasserstoff in einem wärmeübergangsoptimierten Prozeß bei einer spezifischen Katalysatorbelastung von mindestens 10 $Nm^3$/h $H_2$ pro kg Katalysatormasse, bei Nominallast einem Wärmeeintrag von 60%-90% der zugeführten Gesamtwärmemenge und einer Katalysatormasse von weniger als 50% der Gesamtkatalysatormasse unvollständig umgesetzt wird und daß in der nachgeschalteten Stufe (6), welche mehr als 50% der Gesamtkatalysatormasse enthält, eine den Umsatz vervollständigende Reaktion bei geringerer spezifischer Katalysatorbelastung durchgeführt wird.

2. Verfahren nach Anspruch 1,
   **dadurch gekennzeichnet,**
   daß in der ersten Stufe (1) eine hohe Strömungsgeschwindigkeit bei einer Lauflänge von maximal 100 cm und in der zweiten Stufe (6) eine geringere Strömungsgeschwindigkeit eingestellt wird.

3. Verfahren nach Anspruch 1,
   **dadurch gekennzeichnet,**
   daß bei der Wasserdampfreformierung von Methanol die erste Stufe (1) bei einem Temperaturniveau von 250°-400° C und die zweite Stufe (6) bei einem Temperaturniveau von 180°-280° C betrieben wird.

4. Verfahren nach Anspruch 1,
**dadurch gekennzeichnet,**
daß die erste Stufe (1) mit einem hohen Temperaturgradienten zwischen Wärmeträger und Katalysator betrieben wird.

5. Verfahren nach Anspruch 1,
**dadurch gekennzeichnet,**
daß die Wärmezufuhr in der ersten Stufe (1) durch katalytische Verbrennung direkt im Reaktor erfolgt.

6. Vorrichtung zur katalytischen Wasserdampfreformierung von Kohlenwasserstoffen, insbesondere Methanol, mit einer ersten und einer zweiten Stufe, welche jeweils Katalysatormaterial enthalten und mit Mitteln zur Zufuhr von thermischer Energie zumindest zur ersten Stufe,
**dadurch gekennzeichnet,**
daß die erste Stufe (1) weniger als 50% der Gesamtkatalysatormasse mit einer auf den Reaktionsraum bezogenen spezifischen Wärmeaustauschoberfläche von mindestens $250 m^2/m^3$ und die zweite Stufe (6) mehr als 50% der Gesamtkatalysatormasse mit einer spezifischen Wärmeaustauschoberfläche von maximal $100 m^2/m^3$ enthält.

7. Vorrichtung nach Anspruch 6,
**dadurch gekennzeichnet,**
daß als erste Stufe (1) ein Rohrbündelreformer mit einem Rohrdurchmesser von maximal 20 mm oder ein Plattenreformer (16) mit einem Plattenabstand von maximal 15 mm und als zweite Stufe (6) ein Plattenreformer (16) mit einem Plattenabstand von mindestens 20 mm oder ein rohr- oder kastenförmiger Reformer (17) mit einem Durchmesser von mindestens 20 mm verwendet wird.

8. Vorrichtung nach Anspruch 6,
**dadurch gekennzeichnet,**
daß als zweite Stufe (6) ein rohr- oder kastenförmiger Reaktor (17) verwendet wird, in dessen Gehäuse (18) senkrecht zur Längsachse Umlenkstrukturen (19) derart angeordnet sind, daß sich ein mäanderförmiger Strömungsverlauf ergibt.

9. Vorrichtung nach Anspruch 6,
**dadurch gekennzeichnet,**
daß ein Rohrbündelreaktor (20) verwendet wird, daß das Reformgas nach dem Durchströmen der Reaktionsrohre (22) über eine Rückführung (32) in den Gehäuseinnenraum (37) geleitet wird, daß am Gehäuse (21) eine Auslaßleitung (33) zur Abfuhr des Reformgases vorgesehen ist, daß die erste Stufe (1) durch die Reaktionsrohre (22) gebildet wird, die Katalysatormaterial (36) enthalten und zur Ausbildung von Wärmeträgerkanälen (23) jeweils von einem konzentrischen Außenrohr (24) umgeben sind, daß der Gehäuseinnenraum (37) im Bereich außerhalb der Außenrohre (24) zur Ausbildung der zweiten Stufe (6) ebenfalls mit Katalysatormaterial (36) gefüllt ist, und daß sowohl die erste Stufe (1) als auch die zweite Stufe (6) über die beiden Stufen (1, 6) gemeinsamen Wärmeträgerkanäle (23) beheizt werden.

10. Vorrichtung nach Anspruch 9,
**dadurch gekennzeichnet,**
daß in den Wärmeträgerkanälen (23) Strukturen (35) zur Führung des Wärmeträgermediums und/oder in den Reaktionsrohren (22) Einsätze (34) aus einem gut wärmeleitfähigen Material, insbesondere mit sternförmigem Querschnitt, vorgesehen sind und/oder die Reaktionsrohre (22) zur Erhöhung der Wärmeaustauschoberfläche innenberippt sind.

11. Vorrichtung nach Anspruch 9,
**dadurch gekennzeichnet,**
daß das Reformgas nach dem Durchströmen der Reaktionsrohre (22) über den Gehäuseboden (26) in den katalysatorbefüllten Gehäuseinnenraum (37) zurückgeführt und durch den Gehäusedeckel (25) aus dem Reaktor (20) geführt wird.

12. Vorrichtung nach Anspruch 9,
**dadurch gekennzeichnet,**
daß die benötigte Wärmeenergie über ein Wärmeträgermedium oder über eine elektrische Widerstandsheizung (15) zugeführt wird.

13. Vorrichtung nach Anspruch 9,
**dadurch gekennzeichnet,**
daß in den Wärmeträgerkanälen (23) ein Oxidationskatalysator vorgesehen ist und daß ein brennfähiges Gasgemisch durch die Wärmeträgerkanäle (23) geleitet und dort katalytisch verbrannt wird.

14. Vorrichtung nach Anspruch 9,
**dadurch gekennzeichnet,**
daß als erste Stufe (1) ein Plattenreformer eingesetzt wird, bei dem anstelle einer Katalysatorschüttung die den Reaktionskanälen (11) zugewandten Innenseiten der Trennplatten mit Katalysatormaterial 13 beschichtet oder zwischen den Trennplatten Katalysatormatten eingebracht sind.

**Claims**

1. Two-stage process for the catalytic steam re-forming of hydrocarbons, in particular methanol, by supplying heat energy to a steam/hydrocarbon mixture,
**characterized in that**

in the first stage (1) the hydrocarbon is transformed incompletely in a process optimized in relation to heat transfer, at a specific catalyst loading of at least 10 Nm$^3$/h of H$_2$ per kg of catalyst mass, with a nominal load corresponding to a heat input of 60% - 90% of the total quantity of heat supplied and involving a catalyst mass of less than 50% of the total catalyst mass, and in the subsequent stage (6), which involves more than 50% of the total catalyst mass, a reaction that completes the transformation at a lower catalyst loading takes place.

2. Process according to Claim 1, **characterized in that** in the first stage (1) the flow rate is set to a high value over a path length of at most 100 cm and in the second stage (6) the flow rate is set to a lower value.

3. Process according to Claim 1, **characterized in that** in the steam re-forming of methanol the first stage (1) is carried out at a temperature level of 250E-400EC and the second stage (6) at a temperature level of 180E-280EC.

4. Process according to Claim 1, **characterized in that** the first stage (1) is carried out with a high temperature gradient between the heat carrier and the catalyst.

5. Process according to Claim 1, **characterized in that** in the first stage (1) the heat is supplied by catalytic combustion directly in the reactor.

6. Equipment for the catalytic steam re-forming of hydrocarbons, in particular methanol, in a first and a second stage, both of which involve catalyst material, with means of supplying thermal energy at least in the first stage, **characterized in that** the first stage (1) involves less than 50% of the total catalyst mass with a specific heat exchange surface area referred to the reaction volume of at least 250 m$^2$/m$^3$ and the second stage (6) involves more than 50% of the total catalyst mass with a specific heat exchange surface area of at most 100 m$^2$/m$^3$.

7. Equipment according to Claim 6, **characterized in that** a tube bundle re-former with maximum tube diameter 20 mm or a plate re-former (16) with maximum plate separation 15 mm is used for the first stage (1), and a plate re-former (16) with a minimum plate separation of 20 mm or a tube- or box-shaped re-former (17) with minimum diameter 20 mm is used for the second stage (6).

8. Equipment according to Claim 6, **characterized in that** a tube- or box-shaped rector (17) is used for the second stage (6),m in whose housing (18) deflection structures (19) are arranged perpendicularly to the longitudinal axis so as to create a meander-shaped flow path.

9. Equipment according to Claim 6, **characterized in that** a tube bundle reactor (20) is used, the re-forming gas first flows through the reaction tubes (22) and is then led back inside the housing (37) via a return line (32), an outlet line (33) is provided on the housing (21) to lead away the re-formed gas, the first stage (1) is constituted by the reaction tubes (22) which contain catalyst material (36) and each of which is surrounded by a concentric outer tube (24) in order to form heat carrier channels (23), the inside (37) of the housing in the area outside the outer tubes (24) is also filled with catalyst material (36) in order to constitute the second stage (6), and both the first stage (1) and the second stage (6) are heated by means of the heat carrier channels (23) which are in contact with the two stages (1, 6) together.

10. Equipment according to Claim 9, **characterized in that** in the heat carrier channels (23) structures (35) to carry the heat carrier medium and/or in the reactor tubes (22) inserts (34) made of a material that conducts heat well, in particular with a star-shaped cross-section are provided, and/or the reaction tubes (22) have internal fins to increase the heat exchange surface area.

11. Equipment according to claim 9, **characterized in that** the re-form gas first flows through the reaction tubes (22) and is then led back via the bottom (26) of the housing into the catalyst-filled inside (37) of the housing, and passes out of the reactor (20) through the cover (25) of the housing.

12. Equipment according to Claim 9, **characterized in that** the heat energy required is supplied via a heat carrier medium or via an electrical resistance heater (15).

13. Equipment according to Claim 9, **characterized in that** an oxidation catalyst is provided in the heat carrier channels (23) and a combustible gas mixture is passed through the heat carrier channels (23) and there undergoes catalytic combustion.

**14.** Equipment according to Claim 9,
   **characterized in that**
   a plate reformer is used in the first stage (1), in which instead of a catalyst filling, the inner sides of the separator plates facing towards the reaction channels are coated with catalyst material (13) or catalyst material is placed between the separator plates.

## Revendications

**1.** Procédé en deux étapes de réformage catalytique d'hydrocarbures à la vapeur d'eau, en particulier de méthanol, avec apport d'énergie thermique au mélange vapeur d'eau/hydrocarbure, caractérisé en ce que dans la première étape on fait réagir de façon incomplète l'hydrocarbure dans un processus d'optimisation du transfert de chaleur avec une charge spécifique imposée au catalyseur d'au moins 10 Nm$^3$/h d'H$_2$ par kg de masse de catalyseur, à la charge nominale d'un apport de chaleur de 60%-90% de la quantité totale de chaleur ajoutée et une masse de catalyseur inférieure à 50% de la masse totale du catalyseur, et en ce que dans l'étape suivante (6), qui contient plus de 50% de la masse totale de catalyseur, on effectue une réaction de terminaison de la transformation à une plus faible charge spécifique pour le catalyseur.

**2.** Procédé selon la revendication 1, caractérisé en ce que dans la première étape (1) on établit une vitesse d'écoulement élevée à une longueur de course de 100 cm au maximum et en ce que dans la seconde étape (6) on établit une plus faible vitesse d'écoulement.

**3.** Procédé selon la revendication 1, caractérisé en ce que dans le réformage du méthanol à la vapeur d'eau on conduit la première étape (1) à un niveau de température de 250-400°C et la seconde étape (6) à un niveau de température de 180-280°C.

**4.** Procédé selon la revendication 1, caractérisé en ce qu'on conduit la première étape (1) avec un gradient de température élevé entre le caloporteur et le catalyseur.

**5.** Procédé selon la revendication 1, caractérisé en ce que l'apport de chaleur dans la première étape (1) s'effectue par combustion catalytique directement dans le réacteur.

**6.** Dispositif de réformage d'hydrocarbures à la vapeur d'eau, en particulier de méthanol, avec une première et une seconde étape, qui contiennent à chaque fois un matériau catalyseur et qui sont réalisées avec des agents d'apport d'énergie thermique, au moins dans la première étape, caractérisé en ce que la première étape (1) contient moins de 50% de la masse totale de catalyseur avec une surface d'échange de chaleur spécifique, par rapport à l'espace de réaction, d'au moins 250 m$^2$/m$^3$, et en ce que la seconde étape (6) contient plus de 50% de la masse totale de catalyseur avec une surface spécifique d'échange de chaleur de 100m$^2$/m$^3$ au maximum.

**7.** Dispositif selon la revendication 6, caractérisé en ce qu'on utilise comme première étape (1) une unité de réformage tubulaire avec un diamètre de tube de 20 mm au maximum ou une unité de réformage à plaques (16) avec un intervalle entre les plaques de 15 mm au maximum et comme seconde étape (6) une unité de réformage à plaques (16) avec un intervalle entre les plaques de 20 mm au minimum ou unité de réformage tubulaire ou à caisson (17) ayant un diamètre d'au moins 20 mm.

**8.** Dispositif selon la revendication 6, caractérisé en ce qu'on utilise comme seconde étape (6) un reacteur tubulaire ou à caisson (17) dans l'enveloppe (18) duquel sont disposées perpendiculairement à l'axe longitudinal des structures de déviation (19) de manière qu'on ait un écoulement en forme de méandres.

**9.** Dispositif selon la revendication 6, caractérisé en ce qu'on utilise un réacteur à faisceau de tubes qui conduit le gaz de réformage après qu'il ait traversé le tube de réaction (22), par un recyclage (32) à l'intérieur de l'enveloppe (36), en ce que sur l'enveloppe (21) est prévue une canalisation d'évacuation (31) pour évacuer le gaz de réformage, en ce que la première étape (1) est formée par les tubes de réaction (22) qui contiennent le matériau catalyseur (36) et sont à chaque fois, pour former des canaux caloporteurs (23), entourés d'un tube externe concentrique (24), en ce que l'intérieur de l'enveloppe (37) dans la zone située à l'extérieur du tube externe (24) est également rempli de matériau catalyseur (36) pour la réalisation de la seconde étape (6), et en ce qu'aussi bien la première étape (1) que la seconde étape (6) sont chauffées par des canaux caloporteurs (23) communs aux deux étapes (1, 6).

**10.** Dispositif selon la revendication 9, caractérisé en ce que dans les canaux caloporteurs (23) sont prévus des structures (35) pour la conduite du milieu caloporteur et/ou dans les tubes de réaction (22) des pièces d'insertion (34) faites d'un matériau bon conducteur de la chaleur, en particulier ayant une section en forme d'étoile, et/ou dans le tube à réaction (22) pour accroître la surface d'échange de chaleur avec des nervures internes.

11. Dispositif selon la revendication 9, caractérisé en ce qu'on réintroduit le gaz de réformage, après qu'il ait traversé le tube de réaction (22), au-dessus du fond de l'enveloppe (26) dans l'intérieur de l'enveloppe (37) remplie de catalyseur, et en ce qu'on le conduit hors du réacteur (20) à travers le couvercle (25) de l'enveloppe.

12. Dispositif selon la revendication 9, caractérisé en ce que l'énergie thermique nécessaire est introduite par un milieu caloporteur ou par un chauffage avec une résistance électrique (15).

13. Dispositif selon la revendication 9, caractérisé en ce que dans les canaux caloporteurs (23) est prévu un catalyseur d'oxydation, et en ce qu'on fait passer un mélange gazeux combustible à travers les canaux caloporteurs (23) et en ce qu'on lui fait subir à cet endroit une combustion catalytique.

14. Dispositif selon la revendication 9, caractérisé en ce qu'on utilise comme première étape (1) une unité de réformage à plaques dans laquelle au lieu d'un ballast de catalyseur on recouvre les côtés internes des plaques de séparation orientés vers les canaux de réaction (11) avec un matériau catalyseur (13), ou en ce que des mats de catalyseur sont introduits entre les plaques de séparation.

*Fig. 1*

Methanol + H₂O

*Fig. 2*

Methanol + Wasser (Dampf)

→ H₂ + CO₂

*Fig. 3*

Methanol + Wasser (Dampf)

→ H₂ + CO₂

# Fig. 4

*Fig. 5*

*Fig. 6*

*Fig. 7*

*Fig. 8*